# EUROPÄISCHE PATENTSCHRIFT

(11) **EP 0 399 319 B1**
(45) Veröffentlichungstag und Bekanntmachung des Hinweises auf die Patenterteilung: **25.01.1995**
(21) Anmeldenummer: 90108984.7
(22) Anmeldetag: 12.05.1990
(51) Int. Cl.: B60N 2/22, F16H 1/32

(54) **Gelenkbeschlag für Kraftfahrzeuge**
Hinge fitting for motor vehicle seats
Ferrure d'articulation pour sièges de véhicules automobiles

(30) Priorität: 23.05.1989 DE 3916673
(43) Veröffentlichungstag der Anmeldung: 28.11.1990
(73) Patentinhaber: ITT Automotive Europe GmbH, 60488 Frankfurt am Main (DE)
(72) Erfinder: Menne, Hans-Gerd, D-5275 Bergneustadt 3 (DE); Reuber, Gerhard, D-5262 Drolshagen (DE); Shafry, Gavriel, D-4787 Geseke 4 (DE)

(56) Entgegenhaltungen:
- DE-A- 3 241 088
- DE-A- 3 529 887
- DE-C- 3 129 672
- FR-A- 2 398 637
- GB-A- 2 219 735

## Beschreibung

Die Erfindung betrifft einen Gelenkbeschlag für Kraftfahrzeugsitze nach dem Oberbegriff des Patentanspruches 1.

Bei einem bekannten Gelenkbeschlag (DE-OS 37 09 403) ist das Stirnrad einstückig mit dem Gelenkteil ausgebildet und ragt auf einer Seite axial über das Gelenkteil hervor. Das Stirnrad kämmt mit einer Innenverzahnung, welche am anderen Gelenkteil ausgebildet ist. Der bekannte Beschlag ist durch den unsymmetrischen Aufbau anfällig gegen Querkräfte und Torsionsmomente um die Längsachse der Gelenkteile. Die unsymmetrische Ausbildung des Gelenkes erfordert auch eine aufwendige axiale Fixierung.

Aus der DE-OS 29 18 252 ist zwar ein Gelenkbeschlag bekannt, welcher ein auf einem Exzenter gelagertes Stirnzahnrad besitzt, welches mit Innenverzahnungen kämmt, welche an Gelenkteilen vorgesehen sind, die das Stirnzahnrad axial von jeweils einer Seite umgeben. Dabei weisen allerdings die Innenzahnkränze unterschiedliche Zähnezahl auf und sind jeweils einem anderen Gelenkteil zugeordnet. Das Stirnzahnrad ist mit keinem Gelenkteil verbunden, sondern dient lediglich der Verdrehung der beiden innenverzahnten Gelenkteile gegeneinander. Bei diesem bekannten Gelenkbeschlag treten in bezug auf die Stabilität die gleichen Probleme auf, wie bei derjenigen gemäß DE-OS 37 09 403.

In der DE-A-32 41 088 wurde daher ein Gelenkbeschlag der eingangs beschriebenen Art vorgeschlagen. Er besitzt also ein Stirnrad, welches am zweiten Gelenkteil befestigt und auf dem Exzenter gelagert ist und beidseitig axial über das zweite Gelenkteil herausragt. Die auf beiden axialen Seiten gleichen Außenverzahnungen des Stirnrades kämmen mit entsprechenden Innenverzahnungen, welche starr mit dem ersten Gelenkteil verbunden sind. Hierdurch treten auf beiden axialen Seiten die gleichen Kräfte auf, so daß Querkräfte und Torsionsmomente ausgeschaltet sind. Das verwendete Stirnrad ist aus ursprünglich zwei Teilen zusammengesetzt, die von jeweils einer axialen Seite her mit dem zweiten Gelenkteil verpreßt sind. Zur Herstellung eines Formschlusses sind an den beiden Teilen des Stirnrades und am zweiten Gelenkteil Bohrungen und Ausformungen angebracht, welche sicherstellen sollen, daß beim Preßvorgang die Außenverzahnungen der beiden Teile des Stirnrades deckungsgleich befestigt werden. Die Anbringung solcher Bohrungen und Ausformungen sowie die anschließende Montage führen durch den hohen Fertigungsaufwand zu entsprechend hohen Kosten.

Die Aufgabe der vorliegenden Erfindung besteht daher darin, unter Erhaltung der Vorteile dieses bekannten Gelenkbeschlages eine erhebliche Kostenreduzierung bei der Fertigung zu erzielen.

Diese Aufgabe wird gelöst durch die Merkmale im kennzeichnenden Teil des Patentanspruches 1. Durch diese Merkmale wird eine einstückige Fertigung des Stirnrades ermöglicht, so daß die Zahl der miteinander zu verbindenden Teile reduziert wird. Außerdem erübrigen sich jegliche Maßnahmen, die darauf hinzielen, die Außenverzahnungen auf beiden axialen Seiten zur Deckung zu bringen. Dadurch entfällt eine besondere Formgebung des Stirnrades. Lediglich der zweite Gelenkbeschlag wird mit einem Stanzloch versehen, welches ungefähr die Form des Stirnrades aufweist. In dieses Stanzloch kann dann in beliebiger Orientierung das Stirnrad eingepreßt werden. Hierdurch ergibt sich eine weitere Kostenreduzierung.

Damit der Drehsinn der Antriebswelle mit der Schwenkbewegung der Rückenlehne übereinstimmt, ist es sinnvoll, das zweite Gelenkteil der Sitzfläche und das erste Gelenkteil der Lehne zuzuordnen.

Eine besonders große Stabilität gegen Verdrehung um die Längsachse der Gelenkteile wird dadurch erreicht, daß die Abschnitte tellerförmig ausgebildet sind und mit ihren radial äußeren Bereichen am zweiten Gelenkteil anliegen. Eine mit besonders geringeren Aufwand zu montierende, da ohne zusätzliche Befestigungselemente auskommende Ausführungsform, zeichnet sich dadurch aus, daß die Abschnitte an den Stirnseiten des Exzenters anliegen und daß Gelenk axial auf der Antriebswelle sichern. Bei dieser Ausführungsform ist natürlich der Exzenter fest mit der Antriebswelle verbunden, bzw. einstückig mit derselben ausgebildet.

Weitere vorteilhafte Merkmale, sowie die Funktion der Erfindung ergeben sich aus der nachstehenden Beschreibung eines Ausführungsbeispiels der Erfindung anhand der Zeichnungen.

Hierzu zeigt:
Fig. 1 eine Seitenansicht des Gelenkbeschlages
Fig. 2 einen Schnitt durch den Gelenkbeschlag gemäß Linie A-A der Fig. 1

Der Gelenkbeschlag weist ein erste Gelenkteil 1 auf, welches mit einer nicht dargestellten Sitzlehne verbunden ist. Die ebenfalls nicht dargestellte Sitzfläche ist mit dem zweiten Gelenkteil 2 verbunden. Das zweite Gelenkteil 2 ist mit einer Öffnung in Form eines herausgestanzten Stirnrades versehen. In diese Innenverzahnung 7 ist ein eine Außenverzahnung 6 aufweisendes Stirnrad 3 mit gleicher Form und mit geringem Übermaß hineingepreßt. Das Stirnrad 3 besitzt eine größere Breite als das zweite Gelenkteil 2 und ist derart in Letzterem angeordnet, daß es axial auf beiden Seiten um das gleiche Maß hervorsteht. Das Zahnrad 3 ist mittels eines Rollenlagers auf dem Exzenter 11 gelagert, welcher auf der Antriebswelle 10 angeordnet ist. Die Antriebswelle 10 ist mit einer Ausnehmung 12 mit unrundem Querschnitt versehen, die als Mitnehmervorrichtung zur Aufnahme eines Handrades oder eines Elektroantriebs dient.

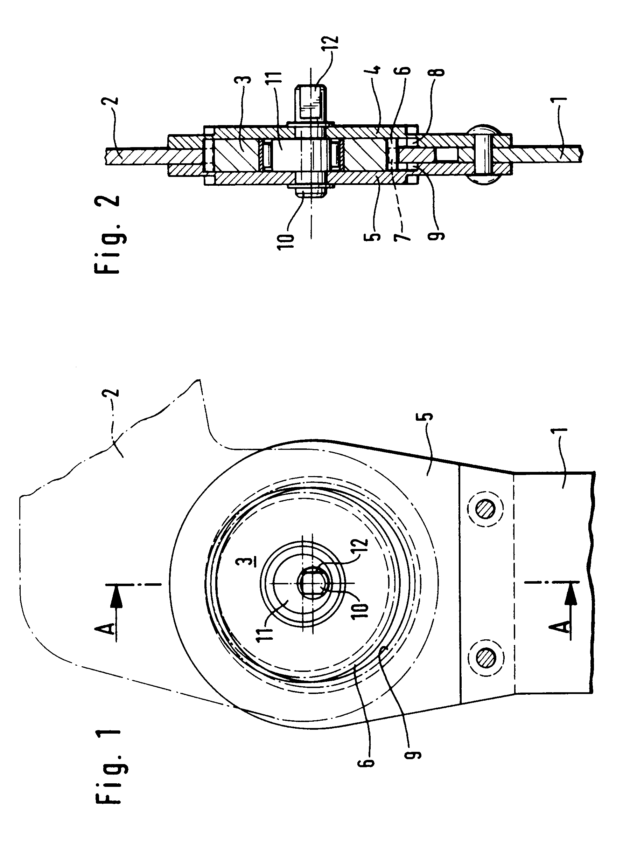

Der Exzenter 11 weist dieselbe Breite wie das Stirnrad 3 auf. An deren Stirnflächen liegen die tellerförmigen Abschnitte 4 und 5 an, welche durch eine Nietverbindung mit dem ersten Gelenkteil 1 verbunden sind. Die Abschnitte 4,5 sind identisch und weisen eine Innenverzahnung 8 bzw. 9 auf, deren Kopfkreisdurchmesser größer ist als derjenige der Außenverzahnung 6 des Stirnrades 3; die Zähnezahl der Innenverzahnung 8,9 ist größer als die Zähnezahl der Außenverzahnung. Die Kopf-, Wälz- und Fußkreisdurchmesser der Verzahnungen sind in Fig. 1, die eine Seitenansicht mit fehlendem Abschnitt 4 zeigt, durch unterschiedliche Stricharten dargestellt.

Die radial äußeren Bereiche der Abschnitte 4,5 sind in axialer Anlage am ersten Gelenkteil 1. In der Zeichnung befindet sich der Exzenter 11 in seiner maximal nach oben ausgelenkten Position, so daß die Außenverzahnung 6 des Stirnrades 3 über eine bestimmte Bogenlänge mit dem oberen Bereich der Innenverzahnung 8,9 in Eingriff steht. Auf der gegenüberliegenden Seite ist ein Abstand zwischen den Kopfkreisen der Außenverzahnung 6 und der Innenverzahnung 8,9.

Wird nun die Antriebswelle 10 gedreht, so kämmt das Stirnrad 3 durch die aufgezwungene exzentrische Bewegung mit der Innenverzahnung 8,9 der Abschnitte 4,5. Durch die unterschiedliche Anzahl der Zähne werden die Gelenkteile 1,2 um einen bestimmten Winkel gegeneinander verschwenkt.

### Bezugszeichenliste

- 1: erstes Gelenkteil
- 2: zweites Gelenkteil
- 3: Stirnrad
- 4: Abschnitt
- 5: Abschnitt
- 6: Außenverzahnung
- 7: Innenverzahnung
- 8: Innenverzahnung
- 9: Innenverzahnung
- 10: Antriebswelle
- 11: Exzenter
- 12: Ausnehmung

## Patentansprüche

1. Gelenkbeschlag für Kraftfahrzeugsitze, mit zwei gegeneinander verschwenkbaren Gelenkteilen, wobei dem ersten Gelenkteil eine Innenverzahnung und dem zweiten Gelenkteil eine Außenverzahnung zugeordnet ist, die miteinander kämmen, wobei die Außenverzahnung eine geringere Zähnezahl und einen geringeren Kopfkreisdurchmesser aufweist als die Innenverzahnung, und mit einer einen Exzenter aufweisenden Antriebswelle, auf der die beiden Gelenkteile gelagert sind, wobei die Außenverzahnung (6) durch ein mit dem zweiten Gelenkteil (2) verbundenes und auf dem Exzenter (11) gelagertes Stirnrad (3) gebildet ist, welches axial beidseitig über das zweite Gelenkteil herausragt und wobei an zwei Abschnitten (4,5) des ersten Gelenkteiles (1), die das Stirnzahnrad (3) axial umgeben, jeweils einanander gleiche Innenverzahnungen (8,9) vorgesehen sind, dadurch **gekennzeichnet,** daß die beiden Abschnitte (4,5) gegeneinander verspannt sind und daß das Stirnrad (3) in eine Öffnung des zweiten Gelenkteils (2) eingreßt ist, welche die Form und Verzahnung des Stirnrades (3) mit geringem Übermaß aufweist.

2. Gelenkbeschlag nach Anspruch 1, dadurch **gekennzeichnet,** daß sich das Stirnzahnrad (3) mittels eines Wälzlagers auf dem Exzenter (11) abstützt.

3. Gelenkbeschlag nach einem der vorhergehenden Ansprüche, dadurch **gekennzeichnet,** daß das zweite Gelenkteil (2) der Sitzfläche und das erste Gelenkteil (1) der Lehne des Fahrzeugsitzes zugeordnet ist.

4. Gelenkbeschlag nach einem der vorhergehenden Ansprüche, dadurch **gekennzeichnet,** daß das erste Gelenkteil (1) mittels eines Gleitlagers auf der Antriebsweille (10) gelagert ist.

5. Gelenkbeschlag nach einem der vorhergehenden Ansprüche, dadurch **gekennzeichnet,** daß die beiden Abschnitte (4,5) baugleich sind.

6. Gelenkbeschlag nach einem der vorhergehenden Ansprüche, dadurch **gekennzeichnet,** daß die Abschnitte (4,5) tellerförmig ausgebildet sind und mit ihren radial äußeren Bereichen am zweiten Gelenkteil (2) anliegen.

7. Gelenkbeschlag nach einem der vorhergehenden Ansprüche, dadurch **gekennzeichnet,** daß die beiden Abschnitte (4,5) an den Stirnseiten des Exzenters (11) anliegen und das Gelenk axiale aif der Antriebswelle (10) sichern.

8. Gelenkbeschlag nach einem der vorhergehenden Ansprüche, dadurch **gekennzeichnet,** daß die Breite des Exzenters (11) der Breite des Stirnzahnrades (3) entspricht.

## Claims

1. An articulated joint fitting for automotive vehicle seats, with two joint parts being rotatable relative to each other, the first joint part thereof being associated with an internal toothing and the second joint part thereof being associated with an external toothing, both of them meshing with each other, the external toothing being furnished with a smaller number of teeth and having a smaller crown circle diameter than the internal toothing, and with a driving shaft being furnished with an eccentric on which the two joint parts are mounted, the external toothing (6) being formed by a spur gear wheel (3) that is coupled to the second joint part (2) and is mounted on the eccentric (11), the said spur gear wheel (3) projecting beyond the second joint part on either side in axial direction, and with internal toothings (8, 9) which are identical to each other being provided at each one of two sections (4, 5) of the first joint part (1) which surround the spur gear wheel (3) in axial direction, **characterized** in that the two sections (4, 5) are braced against each other, and in that the spur gear wheel (3) is pressed into an opening of the second joint part (2) which exhibits the shape and toothing of the spur gear wheel (3) with a slight oversize.

2. An articulated joint fitting as claimed in claim 1,
**characterized** in that the spur gear wheel (3) takes support on the eccentric (11) by means of a roller bearing.

3. An articulated joint fitting as claimed in any one of the preceding claims,
**characterized** in that the second joint part (2) is associated with the seat and the first joint part (1) is associated with the back rest of the vehicle seat.

4. An articulated joint fitting as claimed in any one of the preceding claims,
**characterized** in that the first joint part (1) is supported on the driving shaft (10) by means of a sliding bearing.

5. An articulated joint fitting as claimed in any one of the preceding claims,
**characterized** in that the two sections (4, 5) are identical in design and size.

6. An articulated joint fitting as claimed in any one of the preceding claims,
**characterized** in that the sections (4, 5) are of plate-shaped configuration and abut with their radially external ranges on the second joint part (2).

7. An articulated joint fitting as claimed in any one of the preceding claims,
**characterized** in that the two sections (4, 5) abut on the front sides of the eccentric (11) and secure the joint on the driving shaft (10) in axial direction.

8. An articulated joint fitting as claimed in any one of the preceding claims,
**characterized** in that the width of the eccentric (11) corresponds to the width of the spur gear wheel (3).

## Revendications

1. Ferrure d'articulation pour sièges de véhicules automobiles, comprenant deux éléments d'articulation pouvant pivoter l'un par rapport à l'autre, le premier élément d'articulation étant associé à une denture intérieure et le deuxième élément d'articulation étant associé à une denture extérieure, les dentures s'engrenant l'une dans l'autre, la denture extérieure présentant un nombre de dents inférieur et un diamètre de tête inférieur à ceux de la denture intérieure, et comprenant un arbre d'entraînement muni d'un excentrique, arbre sur lequel sont logés les deux éléments d'articulation, la denture extérieure (6) étant constituée par une roue dentée droite (3) reliée au deuxième élément d'articulation (2) et logée sur l'excentrique (11), saillant axialement des deux côtés au-delà du deuxième élément d'articulation, et des dentures intérieures (8, 9) identiques l'une à l'autre étant prévues sur deux sections (4, 5) du premier élément d'articulation (1) englobant axialement la roue dentée droite (3), caractérisée en ce que les deux sections (4, 5) sont bridées l'une contre l'autre, et en ce que la roue dentée droite (3) est emmanchée dans une ouverture ménagée dans le deuxième élément d'articulation (2), qui présente la forme et la denture de la roue dentée droite (3), avec une légère surépaisseur.

2. Ferrure d'articulation selon la revendication 1, caractérisée en ce que la roue dentée droite (3) s'appuie sur l'excentrique (11) par l'intermédiaire d'un roulement.

3. Ferrure d'articulation selon l'une des revendications précédentes, caractérisée en ce que le deuxième élément d'articulation (2) est associé à l'assise du siège, et que le premier élément d'articulation (1) est associé au dossier du siège pour véhicule.

4. Ferrure d'articulation selon l'une des revendications précédentes, caractérisée en ce que le premier élément d'articulation (1) est logé sur l'arbre d'entraînement (10) par l'intermédiaire d'un palier lisse.

5. Ferrure d'articulation selon l'une des revendications précédentes, caractérisée en ce que les deux sections (4, 5) sont de construction identique.

6. Ferrure d'articulation selon l'une des revendications précédentes, caractérisée en ce que les deux sections (4, 5) sont configurées en forme d'assiettes et en ce que leurs parties radialement extérieures s'appuient sur le deuxième élément d'articulation (2).

7. Ferrure d'articulation selon l'une des revendications précédentes, caractérisée en ce que les deux sections (4, 5) s'appuient sur les faces frontales de l'excentrique (11), et arrêtent l'articulation axialement sur l'arbre d'entraînement (10).

8. Ferrure d'articulation selon l'une des revendications précédentes, caractérisée en ce que la largeur de l'excentrique (11) correspond à la largeur de la roue dentée droite (3).
